# EUROPEAN PATENT SPECIFICATION

(11) **EP 2 837 238 B1**
(45) Date of publication and mention of the grant of the patent: **09.03.2016**
(21) Application number: 13717672.3
(22) Date of filing: 08.04.2013
(51) Int. Cl.: H04W 36/14, H04W 52/02, H04W 36/32, H04W 84/04, H04W 84/12, H04W 88/06

(54) **APPARATUS AND METHOD FOR EFFICIENT MODEM ACTIVATION AND DEACTIVATION**
VORRICHTUNG UND VERFAHREN ZUR EFFIZIENTEN AKTIVIERUNG UND DEAKTIVIERUNG EINES MODEMS
APPAREIL ET PROCÉDÉ D'ACTIVATION ET DÉSACTIVATION EFFICACE D'UN MODEM

(30) Priority: 10.04.2012 US 201213443448
(43) Date of publication of application: 18.02.2015
(73) Proprietor: Qualcomm Incorporated, San Diego, CA 92121 (US)
(72) Inventor: KRISHNASWAMY, Jyotsna, San Diego, California 92121 (US); AWONIYI, Olufunmilola O., San Diego, California 92121 (US)
(74) Representative: Dunlop, Hugh Christopher
(86) International application number: PCT/US2013/035566
(87) International publication number: WO 2013/154962

(56) References cited:
- WO-A1-2004/077752
- US-A1- 2003 118 015
- US-A1- 2010 234 017
- SAMSUNG: "Use of UTRAN for I-WLAN", 3GPP DRAFT; S1-040162 USE OF UTRAN, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG1, no. Innsbruck; 20040119, 19 January 2004 (2004-01-19), XP050221744, [retrieved on 2004-01-19]

## Description

### BACKGROUND

This application relates generally to communications, and more particularly to handing over communications between cellular and non-cellular communications protocols.

Typical indoor technology used for communication includes, for example, non-cellular communications such as Wireless Fidelity (Wi-Fi), global positioning system (GPS), Bluetooth, etc., as well as cellular communications such as the use of femto cells. Each has its own benefits and drawbacks. For example, while Wi-Fi is widely used, a user equipment (UE) should have its Wi-Fi modem turned on to be detected by an access point. Wi-Fi requires significant power consumption on the handset, thus, so many mobile users do not keep the Wi-Fi modem turned on at all times. Also, to connect to a public Wi-Fi access point (AP), a UE would need to be aware of the location's SSID ahead of time. GPS and Bluetooth-based solutions have similar drawbacks. Femto-based solutions are capable of providing seamless detection without manually activating an application. However, location-wide femto deployment could be very expensive since multiple femto cells may be needed to cover a location.

US2010/234017A1 describes a wireless local area network (WLAN) modem of a user equipment (UE) automatically turning on when the 11 detects that the UE has entered into an area (e.g. home) that employs a home network including a femto Node B and a WLAN access point (AP).

### SUMMARY

The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later.

In accordance with some aspects, a method for managing communications is described herein. The method includes receiving, at a server, a request to register a user equipment (UE). The method further includes providing an instruction to trigger activation of a non-cellular modem on the UE. In addition, the method includes receiving a notification that the UE has established communication with a serving access point (AP of a non-cellular communication protocol. The serving AP may be one of one or more non-cellular APs. The method may also include providing an instruction to deactivate a cellular modem on the UE. In some aspects, the method may also include triggering the launch of a mobile application on the UE.

In accordance with some aspects, a computer program product is described herein. The computer program product includes a computer-readable medium that includes at least one instruction for causing a computer to receive a request to register a UE. The computer-readable medium also includes at least one instruction for causing the computer to provide an instruction to trigger activation of a non-cellular modem on the UE. In addition, the computer-readable medium may include instructions for causing the computer to receive a notification that the UE has established communication with a serving AP of a non-cellular communication protocol, and to provide an instruction to deactivate a cellular modem on the UE.

In accordance with some aspects, an apparatus is described herein that includes means for receiving a request to register a UE. The apparatus also includes means for providing an instruction to trigger activation of a non-cellular modem on the UE. In addition, the apparatus includes means for receiving a notification that the UE has established communication with a serving AP of a non-cellular communication protocol. The apparatus may also include means for providing an instruction to deactivate a cellular modem on the UE.

In accordance with some aspects, an apparatus for managing communications is described herein. The apparatus includes at least one processor. The processor may be configured to receive a request to register a UE and to provide an instruction to trigger activation of a non-cellular modem on the UE. The processor may be further configured to receive a notification that the UE has established communication with a serving AP of a non-cellular communication protocol and to provide an instruction to deactivate a cellular modem on the UE. The apparatus may also include a memory coupled to the at least one processor.

In accordance with some aspects, a method for managing communications at a UE is described herein. The method may include receiving an instruction to trigger activation of a non-cellular modem. The instruction to trigger the activation of the non-cellular modem may be received via a cellular AP. The method may also include establishing non-cellular communication with a server via a first non-cellular AP. The first non-cellular AP may be one of one or more non-cellular APs, and may have an overlapping coverage area with a cellular AP. The method further includes receiving an instruction to deactivate a cellular modem and communicating with the server via the non-cellular modem.

In accordance with some aspects, a computer program product is described herein. The computer program product includes a computer-readable medium that comprises at least one instruction for causing a computer to receive an instruction to trigger activation of a non-cellular modem. The instruction to trigger activation of the non-cellular modem may be received via a cellular AP. The computer-readable medium may also include at least one instruction for causing the computer to establish non-cellular communication with a server via a first non-cellular AP. The first non-cellular AP may be one of one or more non-cellular APs, and may have an overlapping coverage area with a cellular AP. The computer-readable medium further includes at least one instruction for causing the computer to receive an instruction to deactivate a cellular modem and at least one instruction for causing the computer to communicate with the server via the non-cellular modem.

In accordance with some aspects, an apparatus is described herein. The apparatus may include means for receiving an instruction to trigger activation of a non-cellular modem. The instruction to trigger activation of the non-cellular modem may be received via a cellular AP. The apparatus may also include means for establishing non-cellular communication with a server via a first non-cellular AP. The first non-cellular AP may be one of one or more non-cellular APs, and may have an overlapping coverage area with a cellular AP. The apparatus further includes means for receiving an instruction to deactivate a cellular modem and means for communicating with the server via the non-cellular modem.

In accordance with some aspects, an apparatus for managing communications is described herein. The apparatus includes at least one processor, and the at least one processor may be configured to receive an instruction to trigger activation of a non-cellular modem. The instruction to trigger activation of the non-cellular modem may be received via a cellular AP. The at least one processor may also be configured to establish non-cellular communication with a server via a first non-cellular AP. The first non-cellular AP may be one of one or more non-cellular APs, and may have an overlapping coverage area with a cellular AP. The at least one processor may be further configured to receive an instruction to deactivate a cellular modem and to communicate with the server via the non-cellular modem.

In accordance with some aspects, a method of managing communications at a cellular access point is described herein. The method may include detecting a UE entering a location associated with the cellular access point. The method may further include transmitting an instruction triggering the UE to activate a non-cellular modem on the UE. In addition, the method may include, upon receiving a response from the UE accepting the instruction triggering the UE to activate the non-cellular modem, transmitting a message to a server indicating that the UE has established non-cellular communications.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects and their equivalents.

### BRIEF DESCRIPTION OF THE DRAWINGS

The disclosed aspects will hereinafter be described in conjunction with the appended drawings, provided to illustrate and not to limit the disclosed aspects, wherein like designations denote like elements, and in which:
Fig. 1 is a block diagram illustrating a system for implementing one or more aspects described herein;
Fig. 2 depicts a server, in accordance with some disclosed aspects;
Fig. 3 depicts a user equipment (UE), in accordance with some disclosed aspects;
Fig. 4 depicts a method for managing communications, in accordance with some disclosed aspects;
Fig. 5 depicts another method for managing communications, in accordance with some disclosed aspects;
Fig. 6 is a call-flow diagram depicting communications, in accordance with some discloses aspects;
Fig. 7 is another call-flow diagram depicting communications, in accordance with some discloses aspects;
Fig. 8 is yet another call-flow diagram depicting communications, in accordance with some discloses aspects;
Fig. 9 depicts an apparatus for managing communications, in accordance with some disclosed aspects;
Fig. 10 depicts another apparatus for managing communications, in accordance with some disclosed aspects; and
Fig. 11 depicts another method for managing communications, in accordance with some disclosed aspects.

### DETAILED DESCRIPTION

Various aspects are now described with reference to the drawings. In the following description, for purposes of explanation, numerous specific details are set forth in order to provide a thorough understanding of one or more aspects. It may be evident, however, that such aspect(s) may be practiced without these specific details.

Apparatus and methods are described herein for seamlessly and efficiently handing over communications between a cellular communication protocol and a non-cellular communication protocol. In some aspects, a cellular communication protocol access point, such as a femto cell access point, may be deployed in a location to automatically detect a user device. The cellular communication protocol access point may be configured to handover communications from the cellular communication protocol to an access point associated with a non-cellular communication protocol deployed in the location.

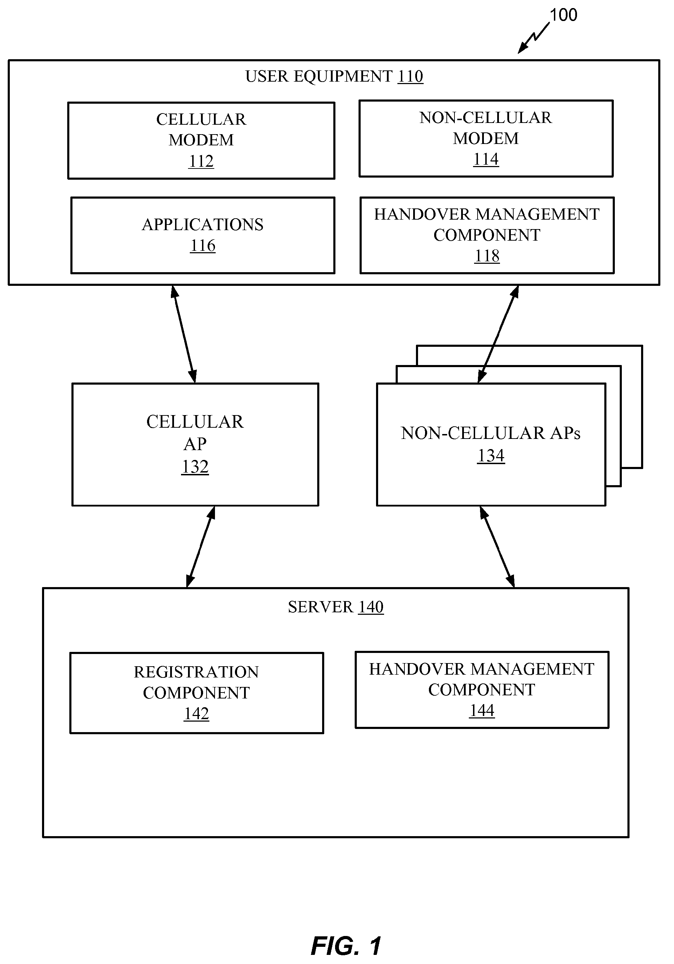

Figure 1 depicts an exemplary system 100 incorporating various aspects of the disclosure. System 100 may include user equipment (UE) 110, which may communicate with a server 140. UE 110 may be, for example, a wireless device, cellular telephone, smartphone, etc. In accordance with some aspects, UE 110 may be a dual-modem device having a cellular modem 112 and a non-cellular modem 114. Cellular modem 112 may be used to communicate with server 140 and/or other devices using cellular communications protocols such as, for example, code division multiple access (CDMA), universal mobile telecommunications system (UMTS), long term evolution (LTE), etc. In some aspects, cellular modem 112 may connect to the server 140 and other devices via a cellular access point (AP) 132. For example, in one aspect, cellular AP 132 may be a femto cell AP. Non-cellular modem 114 may include, for example, Wi-Fi, wireless local access network (WLAN), Bluetooth, GPS, etc., and may communicate with server 140 via non-cellular access point 134. At least one of the non-cellular access points 134 may have an overlapping coverage area with cellular AP 132. For example, cellular AP 132 and a first non-cellular AP 134 having an overlapping coverage area with AP 132 may be deployed at the entrance/exit of a location, such as a location associated with server 140. It should be appreciated that in some aspects, the non-cellular APs 134 may not have overlapping coverage areas with cellular AP 132. As the UE 110 moves, non-cellular communication between the server 140 and UE 110 may be routed through one or more different non-cellular APs 134, depending on the movement of the UE 110.

UE 110 may include one or more applications 116. In some aspects, one or more of applications 116 may be an application associated with a location. For example, if server 140 is associated with a retail store, one or more of applications 116 may include a mobile application associated with the store. UE 110 may also include a handover management component 118 for handling handovers between the cellular and non-cellular communications protocols. For example, handover management component 118 may be configured to receive an instruction to activate non-cellular modem 114, and to connect to one of the non-cellular APs 134. In some aspects, handover management component 118 may also be configured to deactivate cellular modems when not in use. While a single cellular modem and a single non-cellular modem are depicted in Figure 1, UE 110 may have additional modems for connecting to additional technologies. Handover management component 118 may be configured to activate and/or deactivate one or more modems as needed.

Server 140 may be configured to manage communications for UE 110. In some aspects, server 140 may be a home computing device used to manage UE communications at a home location. In other aspects, server 140 may be associated with a location, such as a public location (e.g., a retail store, library, airport, and/or any other public location), etc. As shown in Figure 1, server 140 may include a registration component 142 and a handover management component 144. Registration component 142 may be configured to maintain device profiles for each UE connecting to the server 140, and to register the UE with the server during a first time association between the UE and the server 140, and at the time of subsequent detections of a UE by cellular AP 132. Handover management component 144 may be configured to direct UE 110 to activate and deactivate the cellular modem 112 and non-cellular modem 114. Additionally, handover management component 144 may be configured to receive notifications from the UE indicating that cellular and /or non-cellular communication has been established.

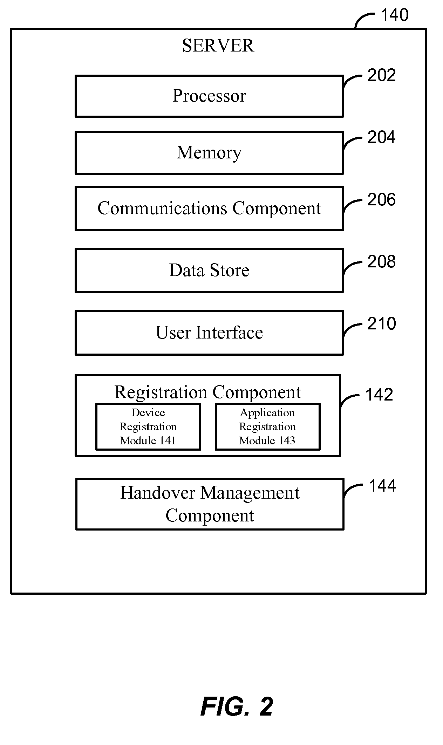

Figure 2 depicts server 140 in greater detail. Server 140 may include a processor 202 for carrying out processing functions associated with one or more of components and functions described herein. Processor 202 can include a single or multiple set of processors or multi-core processors. Moreover, processor 202 can be implemented as an integrated processing system and/or a distributed processing system.

Server 140 further includes a memory 204, such as for storing data used herein and/or local versions of applications being executed by processor 202. Memory 204 can include any type of memory usable by a computer, such as random access memory (RAM), read only memory (ROM), tapes, magnetic discs, optical discs, volatile memory, non-volatile memory, and any combination thereof. Applications may include, for example, one or more context-specific pattern matching applications.

Further, server 140 may include a communications component 206 that provides a means for establishing and maintaining communications with one or more parties utilizing hardware, software, and services as described herein. Communications component 206 may carry communications between components on server 140, as well as between server 140 and external devices, such as devices located across a communications network and/or devices serially or locally connected to server 140. For example, communications component 206 may include one or more buses, and may further include transmit chain components and receive chain components associated with a transmitter and receiver, respectively, operable for interfacing with external devices such as the non-cellular AP 134 and the cellular AP 132.

Additionally, server 140 may further include a data store 208, which can be any suitable combination of hardware and/or software, that provides for mass storage of information, databases, and programs employed in connection with aspects described herein. For example, data store 208 may be a data repository for applications not currently being executed by processor 202. In some aspects, data store 208 may be located within memory 204.

Server 140 may additionally include a user interface component 210 operable to receive inputs from a user of server 140, or serving as an application programming interface (API), and may be further operable to generate outputs for presentation to the user. User interface component 210 may include one or more input devices, including but not limited to a keyboard, a number pad, a mouse, a touch-sensitive display, a navigation key, a function key, a microphone, a voice recognition component, a still camera, a video camera, an audio recorder, and/or any other mechanism capable of receiving an input, or any combination thereof. Further, user interface component 210 may include one or more output devices, including but not limited to a display, a speaker, a haptic feedback mechanism, a printer, any other mechanism capable of presenting an output, or any combination thereof.

Server 140 may also include a registration component 142, which may include a device registration module 141 for maintaining a list of registered devices and profile information associated with each registered device. For example, the profile information may include a unique identifier, such as a mobile telephone number associated with the device, a list of modems included in the device, a list of protocols supported by the device, etc. Device registration module 141 may also be configured to register the device with the system each time the device connects with cellular or non-cellular APs that are associated with the server. Registration component 142 may also include an application registration module 143. As described earlier, in one aspect, server 140 may be associated with a public location. The public location may have one or more applications associated therewith. For example, if the server 140 is associated with a retail store, the retail store may provide a retail shopping application that a user of a mobile device can use for shopping assistance while in the store. Application registration module 143 may be configured to register such mobile applications. The initial registration of such mobile applications may be initiated, for example, when a user access a webpage associated with a location (e.g., a retail store) and completes a registration form. In other aspects, a user may register an application by scanning a Quick Response (QR) code, bar code, etc., associated with the application. In some aspects, registration may include configuring the mobile application to automatically launch upon detecting that the device has entered the associated location. Server 140 may also include handover management component 144, as described above with respect to Figure 1. In some aspects, registration component 142 and handover management component 144 may be implemented by processor 202.

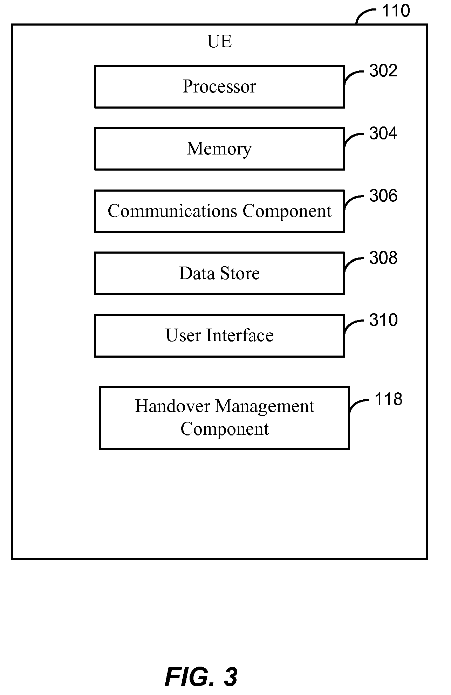

Turning now to Figure 3, UE 110 is shown in greater detail. UE 110 may include a processor 302, memory 304, communications component 306, data store 308, and user interface 310. These components operate in a manner similar to the corresponding components of server 140, and further description will not be provided. UE 110 may also include handover management component 118, described above with respect to Figure 1. In some aspects, handover management component 118 may be implemented by processor 302.

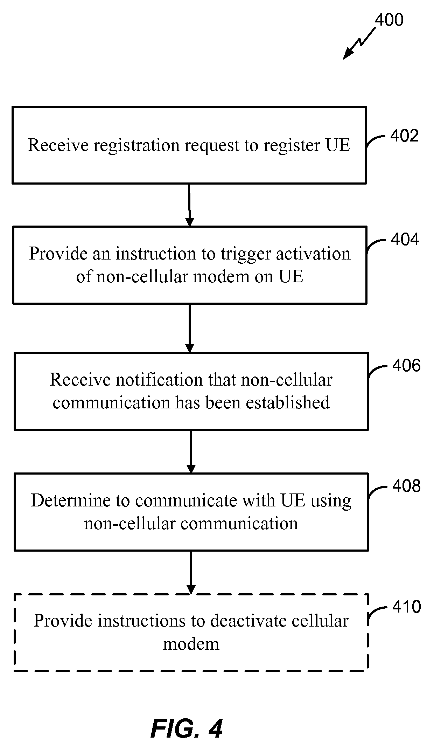

Figure 4 depicts an exemplary method 400 for managing communications. Method 400 may be performed, for example, by server 140 shown in Figures 1 and 2. As shown at 402, a request to register a UE may be received at the server 140. The request may be sent by the cellular AP 132 as the cellular AP detects that the UE 110 has entered a location associated with the server 140. As shown at 404, instructions may then be provided to trigger activation of a non-cellular modem on the UE. For example, server 140 may transmit a message to a cellular AP 132 through which the UE is connected instructing the UE to turn on its non-cellular modem. The message may be forwarded to the UE via the cellular AP 132. In some aspects, an additional message may be transmitted welcoming the UE to its current location. The activation message and/or the welcome message may include information to enable UE 110 to connect to a non-cellular AP. In some aspects, a non-cellular modem may already be turned on. In this case, only information to enable the UE to connect to a non-cellular AP is transmitted via the activation message and/or welcome message.

Upon receipt of the message by the UE 110, the UE activates the non-cellular modem 114 and attempts to establish communication with the non-cellular AP 134. As shown at 406, a notification may be received indicating the UE has established the non-cellular communication once such communication has been established. In some aspects, a first notification may be received via the cellular AP 132 indicating the UE accepted the instruction to turn on its non-cellular modem. This response may be useful, for example, in cases where user permission is required before the server 140 triggers activation the non-cellular modem on UE 110. A second notification may also be received via the non-cellular AP 134 indicating that the UE is connected to the non-cellular access point.

As shown at 408, server 140 may determine to use the non-cellular connection for communicating with the UE 110 while UE is in a location associated with server 140. As described above, server 140 may be associated with a location that provides goods or services, and the location may have one or more applications associated therewith. In some aspects, communicating with UE 110 may include providing navigation information to the UE within the location, promotional information, coupons, advertisements, etc. For example, server 140 may be configured to correlate a location of the UE 110 with one or more location-specific goods or services. Based on the determined location, the server 140 may transmit goods/services related information for the location-specific goods or services. As shown at 410, server 140 may optionally provide an instruction to deactivate the cellular modem on the UE 110. When the cellular modem is deactivated, non-cellular communication may be configured to support the services that the UE 110 requires, or UE 110 may agree to limit services while in the location associated with server 140.

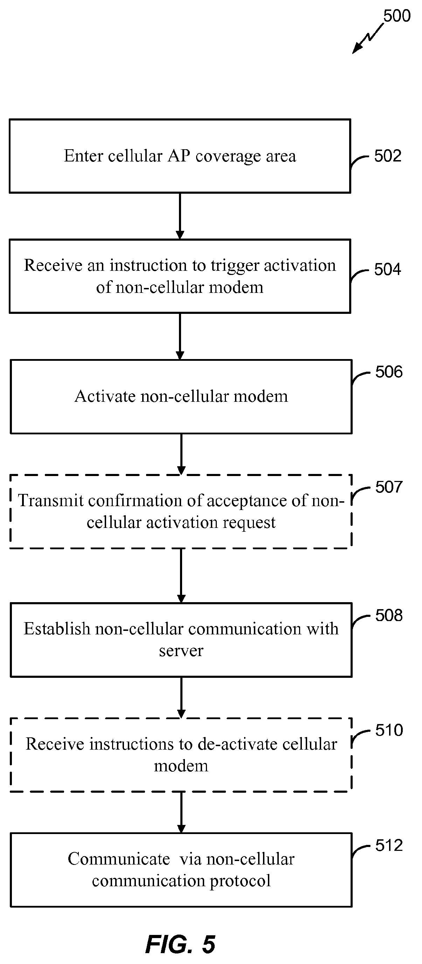

Figure 5 depicts an exemplary method 500 for communications. Method 500 may be performed, for example, by UE 110 depicted in Figure 1 and 3. As shown at 502, UE 110 may enter the service area of a cellular AP 132. Cellular AP 132 may be, for example, a femto AP. As such, AP 132 may automatically detect that UE 110 has entered its coverage area, and AP 132 may send a detection message to the server 140. As shown at 504, UE 110 may receive an instruction to trigger the activation of a non-cellular modem on the device. The instruction may be received from AP 132, for example. In some aspects, the instruction may trigger the UE to activate one or more non-cellular modems automatically. In some aspects, the trigger may include information to enable UE 110 to connect to a non-cellular AP (e.g., a non-cellular AP identifier). As shown at 506, UE 110 may then activate its non-cellular modem. As shown at 507, the UE 110 may optionally transmit a message to the server through the cellular AP 132 confirming that the UE has accepted the request to activate the non-cellular modem. As shown at 508, UE 110 may then establish communication with server 140 for example, via a non-cellular AP 134. In some aspects, multiple non-cellular APs may be deployed, and UE 110 may connect to different APs as it moves. In some aspects, UE 110 may receive an instruction to deactivate its cellular modem, as shown at 510. The instruction to deactivate the cellular modem may be received, for example, from a non-cellular AP. In some aspects, UE 110 may also receive an instruction to deactivate all modems, both cellular and non-cellular, that are not in use. For example, if UE 110 has established communication with server 140 via a Wi-Fi modem, UE 110 may receive an instruction to turn off its cellular modem as well as other non-cellular modems, such as a Bluetooth modem. As depicted at 512, UE 110 may communicate, with server 140 for example, via the non-cellular communication protocol.

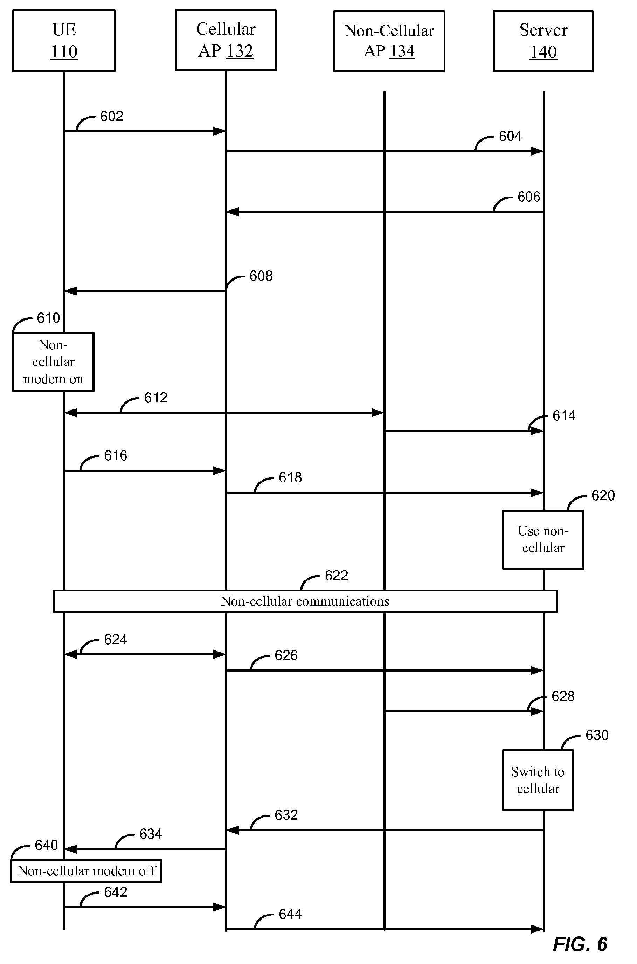

Figure 6 is a communication flow diagram showing communications among UE 110, cellular AP 132, non-cellular AP 134, and server 140, in accordance with one use case. As shown at 602, UE 110 may access cellular AP 132. In some aspects, cellular AP 134 may be a femto cell deployed at the entrance of a location associated with server 140. Cellular AP 132 may then register UE 110 with server 140, as shown at 604. At 606, server 140 may then provide an instruction to cellular AP 132 to cause the UE to activate one or more non-cellular modems. In some aspects, the UE 110 may determine whether to accept or reject the instruction. The instruction to cause the UE to activate one or more non-cellular modems may include an instruction to access and connect to non-cellular AP 134. In some aspects, non-cellular AP 134 may also be located near the entrance of the location associated with server 140, and may have overlapping coverage with cellular AP 132. The instruction to cause the UE to active one or more non-cellular modems may also include connection information for connecting to one or more additional non-cellular APs associated with the server.

As shown at 608, cellular AP 132 forwards the instruction to activate the non-cellular modem to UE 110. Upon acceptance of the instruction, UE 110 activates the non-cellular modem, as shown at 610. UE 110 and non-cellular AP 134 work together to detect and configure non-cellular access, as shown at 612. Once the non-cellular communication has been established, non-cellular AP 134 notifies server 140 that UE is connected, as depicted at 614. As shown at 616, UE 110 acknowledges receipt of the instruction from cellular AP 132. Cellular AP 132 may then notify server 140 of this acceptance, as shown at 618. Server 140 can now communicate with UE 110 via non-cellular communication, as shown at 620 and 622.

When UE 110 is again in range of cellular AP 132, a detection process may occur, as shown at 624, and the cellular AP 132 may notify server 140 that UE 110 is within its coverage area, as shown at 626. In accordance with some aspects, multiple non-cellular APs may be deployed in a location. As shown at 628, non-cellular AP 134 may be configured to notify server 140 that UE 110 is within its coverage area. According to some aspects, based on the past locations of UE 110 and its presence within the coverage area of cellular AP 132, server 140 may determine that UE will be exiting the location. As such, server 140 may decide that UE 110 should switch back to cellular communications, as shown at 630. As shown at 632, server 140 provides an instruction for UE 110 to turn off its non-cellular modem, and this instruction is forwarded to UE 110 from cellular AP 132, as shown at 634. The UE 110 may then turn off its non-cellular modem, as shown and 640, and may optionally notify server 140, via cellular AP 132, that the non-cellular modem has been turned off, as shown at 642 and 644.

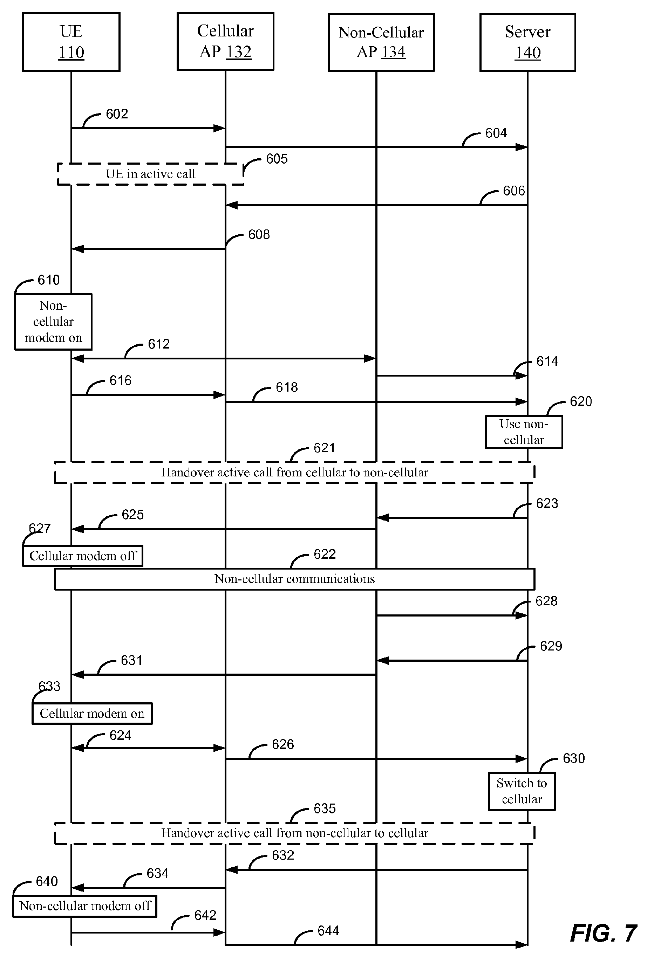

Figure 7 depicts another communication call flow in accordance with another use case. Only those steps not shown in Figure 6 will be described in detail. As shown at 605, UE 110 may be in an active call at some point prior to switching from cellular to non-cellular communication. Although the call is shown to have been started after the UE 110 is registered with the server 140, at 604, in some aspects, the call may be been started prior to the UE accessing the cellular AP 132, shown at 602. Once the non-cellular communication has been established, the active call is handed over to the non-cellular access connection between UE 110 and server 140 via the non-cellular AP 134, as shown at 621.

In accordance with some aspects, power savings can be obtained by deactivating modems not in use. Accordingly, after an active call has been handed over from cellular to non-cellular, server 140 may issue an instruction to deactivate the cellular modem at UE 110. The instruction may be transmitted to the non-cellular AP 134, as shown at 623, which in turn forwards the instruction to UE 110, as shown at 625. As shown at 627, UE 110 may then turn off its cellular modem. Communications between server 140 and UE 110 are now performed via non-cellular communication, as shown at 622. In accordance with some aspects, server 140 may also issue an instruction to turn off other power-intensive modules. For example, where communication between the UE and the server occurs via a Wi-Fi connection, the server may instruct UE 110 to turn off its Bluetooth, GPS, and/or any other power-intensive modules not needed to maintain the communication.

As described above, at least one non-cellular AP 134 may have overlapping coverage area with cellular AP 132, and may be located near the entrance of a location. The at least one non-cellular AP 134 having overlapping coverage area with the cellular AP 132 may notify server 140 that the UE is again within its coverage area, as shown at 628. The server 140 may determine that UE 110 is exiting its location, and may issue an instruction to re-activate the cellular modem, as shown at 629. Non-cellular AP 134 forwards this instruction to UE 110, as shown and 631, and UE 110 re-activates its cellular mode, as shown at 633. The detection process between UE 110 and cellular AP 132 begins, as shown at 624. Once a cellular detection is completed, the cellular AP 132 notifies server 140 that UE 110 has a cellular connection, as shown at 626. The server 140 may then determine to switch to cellular communications as shown at 630 and described above with respect to Figure 6. If an active call is still in progress, the call is handed over from the non-cellular network to the cellular network, as shown at 635.

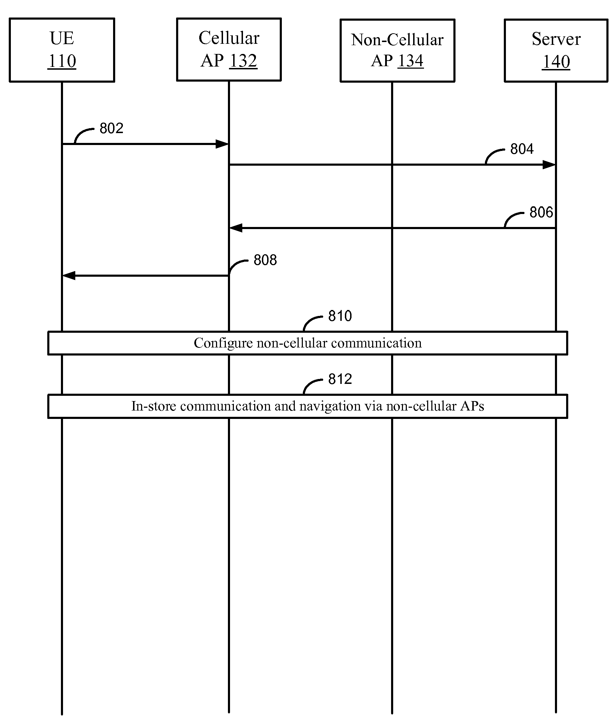

As described herein, in accordance with some aspects, server 140 may be associated with a location, such as a retail store. Figure 8 depicts one use case for communication among UE 110, cellular AP 132, non-cellular AP 134, and server 140 to provide shopping assistance and navigation while in a retail store. While this particular use case shows communication with respect to a shopping application and retail store, the method is also applicable to any location that can provide services to a user while at a location. As shown at 802, cellular AP 132 may detect that UE 110 has entered its coverage area. Cellular AP 132 may be, for example, a femto cell, and may be deployed at the entrance of the retail store.

As shown at 804, cellular AP 132 registers UE 110 with server 140. Registration may include, for example, transmitting identification information associated with UE 110. The identification information may include, for example, a telephone number or other identification number associated with the UE, a personal ID/username associated with a user of the UE, etc. In some aspects, server 140 may be located remotely from a retail store associated with the server, and may serve as an application server for one or more retail stores/other locations. In this case, registration may also include transmitting an ID number/name associated with the particular store that the UE 110 has entered. In some aspects, cellular AP 132 may maintain UE and/or store profile information associated with each registered UE and store. In other aspects, the UE/store profile information may be stored at server 140 or at any other location. Registration may include retrieving the profile information.

As shown at 806, server 140 may transmit a welcome message and/or trigger to cellular AP 132, which in turn forwards the welcome message/trigger to UE 110, as shown at 808. In some aspects, the welcome message may be a message welcoming a user of UE 110 to the location. The trigger message may be used to trigger UE 110 to turn on its non-cellular modem, and to automatically launch an application associated with the store. As shown at 810, non-cellular communication may be configured. In some aspects, the retail store may be equipped with multiple non-cellular APs 134. A first non-cellular AP may have an overlapping coverage area with cellular AP 132. As the UE 110 moves through the store, the UE 110 may connect to different non-cellular APs 134.

Once non-cellular communications have been established, server 140 may decide to communicate with UE 110 via non-cellular communication, and in-store communication and navigation may be provided via the one or more non-cellular APs 134, as shown at 812. In some aspects, these communications may include, for example, providing navigation services enabling a user of the UE to locate products of interest within the store, providing promotional materials, such as coupons or other incentives, etc. In some aspects, server 140 may be configured to correlate a location of UE 110 with one or more location-specific goods or services. Based on the determined location, the server 140 may transmit goods/services related information for the location-specific goods or services. In some aspects, the server 140 may be configured to track the location of the UE as it moves through the store. This may include, for example, receiving location information from the UE 110 periodically, tracking the interaction of the UE with known location markers throughout the store, or tracking the UE 110 as it connects to different non-cellular APs 134. For example, based on the tracked location and/or interaction information, the server 140 may be able to determine whether the UE 110 is exiting the store. This may cause the server 140 to trigger the UE 110 to deactivate the application associated with the store. In addition, this may cause the server 140 to trigger the UE 110 to handover communications back to cellular communications, and if previously deactivated, to re-activate the cellular modem associated with UE 110, as shown in Figure 7.

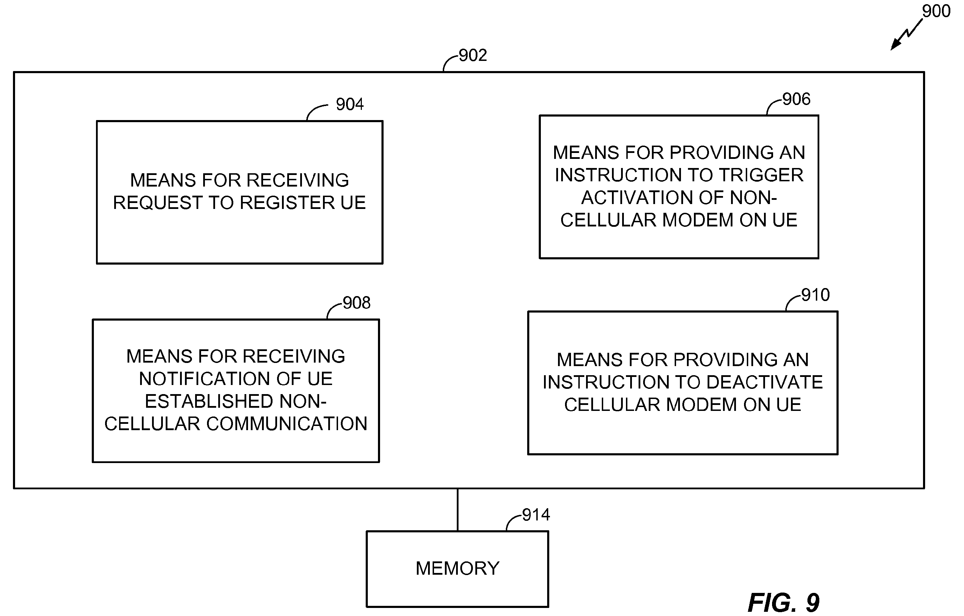

Referring to Figure 9, an apparatus 900 that manages communications can reside at least partially within server 140. It is to be appreciated that apparatus 900 is represented as including functional blocks, which can represent functions implemented by a processor, software, or combination thereof (e.g., firmware). As such, apparatus 900 includes a logical grouping 902 of electrical components that can act in conjunction. For instance, logical grouping 902 may include means for receiving a request to register a user equipment (UE) (Block 904). For example, in an aspect, the means 904 can include registration component 142 and/or processor 202. Logical grouping 902 can include means for providing an instruction to trigger activation of a non-cellular modem on the UE (Block 906). For example, in an aspect, the means 906 can include handover management component 144 and/or or processor 202. Further, logical grouping 902 can include means for receiving a notification that the UE has established communication with a serving AP of a non-cellular communication protocol (Block 908). In an aspect, the means 908 may include handover management component 144, and/or processor 202. Also, logical grouping 902 can include means for providing an instruction to deactivate a cellular modem on the UE (Block 910). In an aspect, the means 910 may include handover management component 144 and/or or processor 202.

Additionally, apparatus 900 can include a memory 914 that retains instructions for executing functions associated with blocks 904-910. While shown as being external to memory 914, it is to be understood that one or more of blocks 904-910 can exist within memory 914. In an aspect, for example, memory 914 may be the same as or similar to memory 204 or data store 208 (Figure 2).

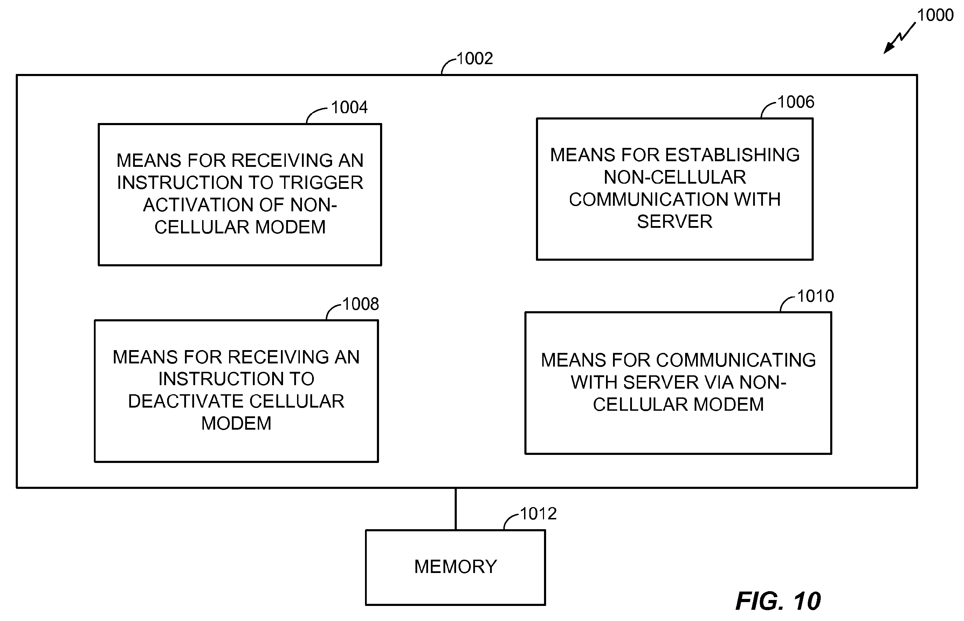

Figure 10 depicts an apparatus 1000 that manages communications. Apparatus 1000 can reside at least partially within user equipment (UE) 110. It is to be appreciated that apparatus 1000 is represented as including functional blocks, which can represent functions implemented by a processor, software, or combination thereof (*e.g*., firmware). As such, apparatus 1000 includes a logical grouping 1002 of electrical components that can act in conjunction. For instance, logical grouping 1002 can include means for receiving an instruction to trigger activation of a non-cellular modem (Block 1004). For example, in an aspect, the means 1004 may include handover management component 118 and/or or processor 302. Further, logical grouping 1002 can include means establishing non-cellular communication with a server via a first non-cellular AP (Block 1006). The first non-cellular AP may be one or a plurality of non-cellular APs and may have overlapping coverage area with a cellular AP. For example, in an aspect, the means 1006 can include non-cellular modem 114, handover management component 118, and/or or processor 302. Also, logical grouping 1002 can include means for receiving an instruction to deactivate a cellular modem (Block 1008). For example, in an aspect, the means 1008 can include handover management component 118 and/or or processor 302. Logical grouping 1002 may also include means for communicating with the server via the non-cellular modem (Block 1010). For example, in an aspect, the means 1010 can include handover management component 118, communications component 306 and/or or processor 302.

Additionally, apparatus 1000 can include a memory 1012 that retains instructions for executing functions associated with blocks 1004, 1006, 1008, and 1010. While shown as being external to memory 1012, it is to be understood that one or more of blocks 1004, 1006, 1008, and 1010 can exist within memory 1012. In an aspect, for example, memory 1012 may be the same as or similar to memory 304 or data store 308 (Figure 3).

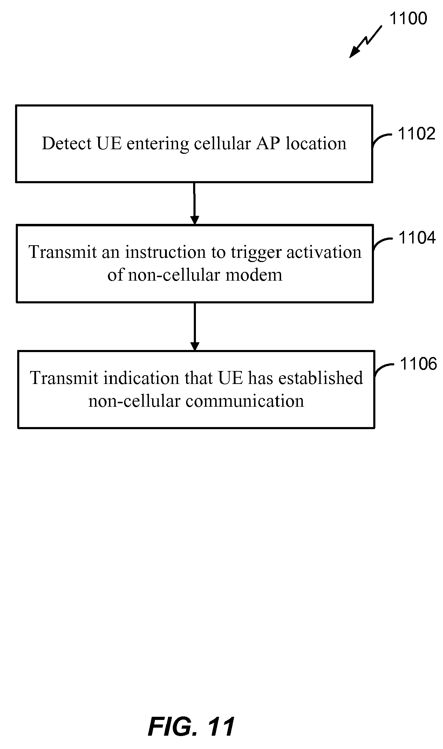

Figure 11 depicts an example method 1100 for managing communications. Method 1100 may be performed, for example, by cellular AP 132, shown in Figure 1. Cellular AP 132 may include one or more processors for performing the functions described herein. As shown at 1102, a cellular AP may detect that a UE has entered a location associated with the cellular AP. For example, the cellular AP may be a femto cell deployed at the entrance of a location, and may automatically detect when a UE enters its coverage area. As shown at 1104, an instruction triggering the UE to activate a non-cellular modem on the UE may be transmitted. In some aspects, a server may send the instruction to the cellular AP, which in turn forwards the instruction to the UE. As shown at 1106, upon receives a response from the UE accepting the instruction, a message may be transmitted to the server indicating that the UE has established non-cellular communication.

In this application, the word "exemplary" is used herein to mean serving as an example, instance, or illustration. Any aspect or design described herein as "exemplary" is not necessarily to be construed as preferred or advantageous over other aspects or designs. Rather, use of the word exemplary is intended to present concepts in a concrete fashion

As used in this application, the terms "component," "module," "system" and the like are intended to include a computer-related entity, such as but not limited to hardware, firmware, a combination of hardware and software, software, or software in execution. For example, a component may be, but is not limited to being, a process running on a processor, a processor, an object, an executable, a thread of execution, a program, and/or a computer. By way of illustration, both an application running on a computing device and the computing device can be a component. One or more components can reside within a process and/or thread of execution and a component may be localized on one computer and/or distributed between two or more computers. In addition, these components can execute from various computer readable media having various data structures stored thereon. The components may communicate by way of local and/or remote processes such as in accordance with a signal having one or more data packets, such as data from one component interacting with another component in a local system, distributed system, and/or across a network such as the Internet with other systems by way of the signal.

Furthermore, various aspects are described herein in connection with a UE, which can be a wired UE or a wireless UE. A UE can also be called a system, device, subscriber unit, subscriber station, mobile station, mobile, mobile device, remote station, remote terminal, access terminal, user terminal, terminal, communication device, user agent, or user device. A wireless UE may be a cellular telephone, a satellite phone, a cordless telephone, a Session Initiation Protocol (SIP) phone, a wireless local loop (WLL) station, a personal digital assistant (PDA), a handheld device having wireless connection capability, a computing device, or other processing devices connected to a wireless modem. Moreover, various aspects are described herein in connection with a base station. A base station may be utilized for communicating with wireless terminal(s) and may also be referred to as an access point, a Node B, or some other terminology.

Moreover, the term "or" is intended to mean an inclusive "or" rather than an exclusive "or." That is, unless specified otherwise, or clear from the context, the phrase "X employs A or B" is intended to mean any of the natural inclusive permutations. That is, the phrase "X employs A or B" is satisfied by any of the following instances: X employs A; X employs B; or X employs both A and B. In addition, the articles "a" and "an" as used in this application and the appended claims should generally be construed to mean "one or more" unless specified otherwise or clear from the context to be directed to a singular form.

The techniques described herein may be used for various wireless communication systems such as CDMA, TDMA, FDMA, OFDMA, SC-FDMA and other systems. The terms "system" and "network" are often used interchangeably. A CDMA system may implement a radio technology such as Universal Terrestrial Radio Access (UTRA), cdma2000, etc. UTRA includes Wideband-CDMA (W-CDMA) and other variants of CDMA. Further, cdma2000 covers IS-2000, IS-95 and IS-856 standards. A TDMA system may implement a radio technology such as Global System for Mobile Communications (GSM). An OFDMA system may implement a radio technology such as Evolved UTRA (E-UTRA), Ultra Mobile Broadband (UMB), IEEE 802.11 (Wi-Fi), IEEE 802.16 (WiMAX), IEEE 802.20, Flash-OFDM , etc. UTRA and E-UTRA are part of Universal Mobile Telecommunication System (UMTS). 3GPP Long Term Evolution (LTE) is a release of UMTS that uses E-UTRA, which employs OFDMA on the downlink and SC-FDMA on the uplink. UTRA, E-UTRA, UMTS, LTE and GSM are described in documents from an organization named "3rd Generation Partnership Project" (3GPP). Additionally, cdma2000 and UMB are described in documents from an organization named "3rd Generation Partnership Project 2" (3GPP2). Further, such wireless communication systems may additionally include peer-to-peer (*e.g*., mobile-to-mobile) *ad hoc* network systems often using unpaired unlicensed spectrums, 802.xx wireless LAN, BLUETOOTH and any other short- or long- range, wireless communication techniques.

Various aspects or features will be presented in terms of systems that may include a number of devices, components, modules, and the like. It is to be understood and appreciated that the various systems may include additional devices, components, modules, etc. and/or may not include all of the devices, components, modules etc. discussed in connection with the figures. A combination of these approaches may also be used.

The various illustrative logics, logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but, in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. Additionally, at least one processor may comprise one or more modules operable to perform one or more of the steps and/or actions described above.

Further, the steps and/or actions of a method or algorithm described in connection with the aspects disclosed herein may be embodied directly in hardware, in a software module executed by a processor, or in a combination of the two. A software module may reside in RAM memory, flash memory, ROM memory, EPROM memory, EEPROM memory, registers, a hard disk, a removable disk, a CD-ROM, or any other form of storage medium known in the art. An exemplary storage medium may be coupled to the processor, such that the processor can read information from, and write information to, the storage medium. In the alternative, the storage medium may be integral to the processor. Further, in some aspects, the processor and the storage medium may reside in an ASIC. Additionally, the ASIC may reside in a user terminal. In the alternative, the processor and the storage medium may reside as discrete components in a user terminal. Additionally, in some aspects, the steps and/or actions of a method or algorithm may reside as one or any combination or set of codes and/or instructions on a machine readable medium and/or computer readable medium, which may be incorporated into a computer program product.

In one or more aspects, the functions described may be implemented in hardware, software, firmware, or any combination thereof. If implemented in software, the functions may be stored or transmitted as one or more instructions or code on a computer-readable medium. Computer-readable media includes both computer storage media and communication media including any medium that facilitates transfer of a computer program from one place to another. A storage medium may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection may be termed a computer-readable medium. For example, if software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and blu-ray disc where disks usually reproduce data magnetically, while discs usually reproduce data optically with lasers. Combinations of the above should also be included within the scope of computer-readable media.

While the foregoing disclosure discusses illustrative aspects and/or embodiments, it should be noted that various changes and modifications could be made herein without departing from the scope of the described aspects and/or embodiments as defined by the appended claims. Furthermore, although elements of the described aspects and/or embodiments may be described or claimed in the singular, the plural is contemplated unless limitation to the singular is explicitly stated. Additionally, all or a portion of any aspect and/or embodiment may be utilized with all or a portion of any other aspect and/or embodiment, unless stated otherwise.

## Claims

1. A method at a server (140) for managing communications, comprising:
receiving (402), a request to register a user equipment, UE (110);
providing (404) an instruction to trigger activation of a non-cellular modem (114) on the UE (110); and
receiving (406) a notification that the UE (110) has established communication with a serving access point, AP (134) of a non-cellular communication protocol, the serving AP (134) being one of one or more non-cellular APs; **characterized by**: providing (410) an instruction to deactivate a cellular modem (112) on the UE (110).

2. The method of claim 1, wherein the notification comprises a first notification, received via the serving AP (134) of the non-cellular communication protocol, indicating that the UE (110) has established the communication with the serving AP (134) of the non-cellular communication protocol, and a second notification, received via a cellular communication protocol, indicating that the UE (110) has accepted the instruction to trigger activation of the non-cellular modem (114) ; or.
wherein the request is received from a femto cell access point, and the instruction to trigger activation of the non-cellular modem (114) and the instruction to deactivate the cellular modem (112) are transmitted to the femto cell access point; or
wherein providing the instruction to trigger activation of the non-cellular modem (134) on the UE comprises:
transmitting a message to a serving AP (132) of a cellular communication protocol that triggers the UE (110) to handover the communication with the server (140) to the non-cellular modem (134) from the cellular modem (112), the message triggering the UE to activate the non-cellular modem (114).

3. The method of claim 2, further comprising:
receiving an indication that the UE (110) is within a coverage area of a cellular AP (132) of the cellular communication protocol having overlapping coverage with a non-cellular AP (134) of the non-cellular communication protocol;
determining, based on the indication and one or more previously detected positions of the UE (110) that the UE (110) is exiting a location, and handing over the communication to the cellular modem on the UE (110); and
transmitting a message to a serving access point (134) of the non-cellular communication protocol that triggers the UE (110) to handover the communication with the server (140) to the cellular modem (112) from the non-cellular modem (114), the message triggering the UE (110) to reactivate the cellular modem (112); wherein the message comprises a trigger to re-activate the cellular modem (112), to terminate communication via the non-cellular communication protocol, and to deactivate the non-cellular modem (114).

4. The method of claim 1, wherein the request to register the UE (110) is received from a device in cellular communication with the UE (110).

5. The method of claim 1, further comprising:
transmitting a message providing an instruction to trigger a mobile application to launch on the UE (110) upon receipt of a request to register the UE (110), wherein receipt of the request indicates that the UE (110) has entered a location associated with the mobile application.

6. The method of claim 5, wherein the mobile application provides one or more services associated with at least one of the location or an application server associated with the location.

7. The method of claim 1, wherein receiving the request to register the UE (110) includes receiving a mobile identifier obtained through an access procedure between the UE (110) and a femto cell access point.

8. The method of claim 7, further comprising:
receiving serving access point information indicating the UE (110) is communicating with a new one of the one or more non-cellular APs;
determining a location of the UE (110) based on the serving access point information;
correlating the location of the UE (110) with one or more location-specific goods or services; and
transmitting a good or service-related information of the one or more location-specific goods or services based on the correlating; or further comprising:
receiving serving access point information indicating the UE (110) is communicating with a new one of the one or more non-cellular APs;
tracking a location of the UE (110) based on the serving access point information;
tracking interaction information of a user of the UE (110) in each location; and
storing the location and the interaction information for subsequent analysis.

9. An apparatus, comprising:
means for receiving (402) a request to register a user equipment, UE (110);
means for providing (404) an instruction to trigger activation of a non-cellular modem (114) on the UE (110); and
means for receiving (406) a notification that the UE has established communication with a serving access point, AP (134) of a non-cellular communication protocol; **characterized by**:
means for providing (410) an instruction to deactivate a cellular modem (112) on the UE (110).

10. A method at a user equipment, UE (110), for managing communications comprising:
receiving (504) an instruction, via a cellular access point, AP (132), to trigger activation of a non-cellular modem (114);
establishing (508) non-cellular communication with a server (140) via a first non-cellular AP (134), the first non-cellular AP (134) being one of one or more non-cellular APs and having an overlapping coverage area with the cellular AP (132); **characterized by**:
receiving (510) an instruction to deactivate a cellular modem (112); and
communicating (512) with the server (140) via the non-cellular modem (114).

11. The method of claim 10, wherein the cellular AP (132) is a femto cell AP; or wherein the instruction to deactivate the cellular modem (112) is received from one of the one or more non-cellular APs; or further comprising receiving an instruction to deactivate one or more of a GPS modem or a Bluetooth modem after establishing the non-cellular communication with the server (140).

12. The method of claim 11, further comprising:
receiving a message to handover communication with the server (140) to the non-cellular modem (114) from the cellular modem (112) before de-activating the cellular modem (112).

13. The method of claim 10, wherein communicating with the server (140) via the non-cellular modem (112) comprises communicating via one or more of the one or more non-cellular APs as the UE (110) moves through a location ; or further comprising receiving an instruction to re-activate the cellular modem (112) upon re-entering a coverage area of the cellular AP (132).

14. An apparatus, comprising:
means for receiving (504) an instruction, via a cellular access point, AP (132), to trigger activation of a non-cellular modem (114);
means for establishing (508) non-cellular communication with a server (140) via a first non-cellular AP, the first non-cellular AP (134) being one of one or more non-cellular APs and having an overlapping coverage area with the cellular AP (132); **characterized by**:
means for receiving (510) an instruction to deactivate a cellular modem (112); and
means for communicating (512) with the server (140) via the non-cellular modem (114).

15. A computer program product comprising a computer-readable medium comprising at least one instruction for causing a computer to perform the method of claim 1 or claim 10.

## Patentansprüche

1. Ein Verfahren an einem Server (140) zum Managen bzw. Verwalten von Kommunikationen, das Folgendes aufweist:
Empfangen (402) einer Anfrage, eine Nutzereinrichtung bzw. UE (UE = user equipment) (110) zu registrieren;
Vorsehen (404) eines Befehls bzw. einer Instruktion, eine Aktivierung eines nicht-zellularen Modems (114) auf der UE (110) auszulösen; und
Empfangen (406) einer Benachrichtigung, dass die UE (110) eine Kommunikation mit einem versorgenden Zugriffspunkt bzw. AP (AP = access point) (134) eines nicht zellularen Kommunikationsprotokolls eingerichtet hat, wobei der versorgende AP (134) einer von einem oder mehreren nichtzellularen APs ist; **gekennzeichnet durch**: Vorsehen (410) eines Befehls, ein zellulares Modem (112) auf der UE (110) zu deaktivieren.

2. Verfahren nach Anspruch 1, wobei die Benachrichtigung eine erste Benachrichtigung, die über den versorgenden AP (134) des nicht zellularen Kommunikationsprotokolls empfangen wird, die anzeigt, dass die UE (110) die Kommunikation mit dem versorgenden AP (134) des nicht-zellularen Kommunikationsprotokolls eingerichtet hat, und eine zweite Benachrichtigung, die über ein zellulares Kommunikationsprotokoll empfangen wird, die anzeigt, dass die UE (110) den Befehl angenommen hat, die Aktivierung des nicht zellularen Modems (114) auszulösen, aufweist; oder
wobei die Anfrage von einem Femtozellen-Zugriffspunkt empfangen wird, und wobei der Befehl zum Auslösen des nicht zellularen Modems (114) und der Befehl zum Deaktivieren des zellularen Modems (112) an den Femtozellenzugriffspunkt gesendet werden; oder
wobei das Vorsehen des Befehls zum Auslösen einer Aktivierung des nicht zellularen Modems (134) auf der UE Folgendes aufweist:
Senden einer Nachricht an einen versorgenden AP (132) eines zellularen Kommunikationsprotokolls, die auslöst, dass die UE (110) die Kommunikation mit dem Server (140) an das nicht zellulare Modem (134) von dem zellularen Modem (112) übergibt, wobei die Nachricht auslöst, dass die UE das nicht zellulare Modem (114) aktiviert.

3. Verfahren nach Anspruch 2, das weiter Folgendes aufweist:
Empfangen einer Anzeige, dass die UE (110) innerhalb eines Abdeckungsbereichs eines zellularen AP (132) des zellularen Kommunikationsprotokolls ist, der eine überlappende Abdeckung hat mit einem nicht zellularen AP (134) des nicht zellularen Kommunikationsprotokolls;
Bestimmen, basierend auf der Anzeige und einer oder mehreren zuvor detektierten Positionen der UE (110), dass die UE (110) eine Position verlässt, und Übergeben der Kommunikation an das zellulare Modem auf der UE (110); und
Senden einer Nachricht an einen versorgenden Zugriffspunkt (134) des nicht zellularen Kommunikationsprotokolls, die auslöst, dass die UE (110) die Kommunikation mit dem Server (140) an das zellulare Modem (112) von dem nicht zellularen Modem (114) übergibt, wobei die Nachricht auslöst, dass die UE (110) das zellulare Modem (112) reaktiviert; wobei die Nachricht einen Auslöser aufweist, das zellulare Modem (112) zu reaktivieren, um eine Kommunikation über das nicht-zellulare Kommunikationsprotokoll zu beenden, und das nicht zellulare Modem (114) zu deaktivieren.

4. Verfahren nach Anspruch 1, wobei die Anfrage, die UE (110) zu registrieren, von einer Einrichtung empfangen wird, die sich in zellularer Kommunikation mit der UE (110) befindet.

5. Verfahren nach Anspruch 1, das weiter Folgendes aufweist:
Senden einer Nachricht, die einen Befehl vorsieht, auszulösen, dass eine mobile Anwendung bzw. Mobilgerätanwendung auf der UE (110) beim Empfang einer Anfrage, die UE (110) zu registrieren, gestartet wird, wobei der Empfang der Anfrage anzeigt, dass die UE (110) einen Standort erreicht bzw. betreten hat, der mit der mobilen Anwendung assoziiert ist.

6. Verfahren nach Anspruch 5, wobei die Mobilgerätanwendung einen oder mehrere Dienste vorsieht, die mit dem Standort und/oder einem Anwendungsserver assoziiert sind, der mit dem Standort assoziiert ist.

7. Verfahren nach Anspruch 1, wobei das Empfangen der Anfrage, die UE (110) zu registrieren, Empfangen eines Mobilgerätidentifikators beinhaltet, der durch eine Zugriffsprozedur zwischen der UE (110) und einem Femtozellenzugriffspunkt erlangt wird.

8. Verfahren nach Anspruch 7, das weiter Folgendes aufweist:
Empfangen von Versorgungszugriffspunktinformation, die anzeigt, dass die UE (110) mit einem neuen der ein oder mehreren nicht zellularen APs kommuniziert;
Bestimmen eines Standortes der UE (110), basierend auf der Versorgungszugriffspunktinformation;
Korrelieren des Standortes der UE (110) mit einem oder mehreren standortspezifischen Gütern oder Dienstleistungen; und
Senden von güter- oder dienstleistungsbezogener Information der ein oder mehreren standortspezifischen Güter oder Dienstleistungen basierend auf dem Korrelieren; oder das weiter Folgendes aufweist:
Empfangen von Versorgungszugriffspunktinformation, die anzeigt, dass die UE (110) mit einem neuen der ein oder mehreren nicht zellularen APs kommuniziert;
Nachverfolgen eines Standortes der UE (110) basierend auf der Versorgungszugriffspunktinformation;
Nachverfolgen von Interaktionsinformation eines Nutzers der UE (110) an jedem Standort; und
Speichern des Standortes und der Interaktionsinformation für eine nachfolgende Analyse.

9. Eine Vorrichtung, die Folgendes aufweist:
Mittel zum Empfangen (402) einer Anfrage, eine Nutzereinrichtung bzw. UE (110) zu registrieren;
Mittel zum Vorsehen (404) eines Befehls, eine Aktivierung eines nicht zellularen Modems (114) auf der UE (110) auszulösen; und
Mittel zum Empfangen (406) einer Benachrichtigung, dass die UE eine Kommunikation mit einem versorgenden Zugriffspunkt bzw. AP (AP = access point) (134) eines nicht zellularen Kommunikationsprotokolls eingerichtet hat;
**gekennzeichnet durch**:
Mittel zum Vorsehen (410) eines Befehls, ein zellulares Modem (112) auf der UE (110) zu deaktivieren.

10. Ein Verfahren an einer Nutzereinrichtung bzw. UE (UE = user equipment) (110) zum Verwalten von Kommunikationen, das Folgendes aufweist:
Empfangen (504) eines Befehls über einen zellularen Zugriffspunkt bzw. AP (132), eine Aktivierung eines nicht zellularen Modems (114) auszulösen;
Einrichten (508) nicht zellularer Kommunikation mit einem Server (140) über einen ersten, nicht zellularen AP (134), wobei der erste nicht-zellulare AP (134) einer von einem oder mehreren nicht zellularen APs ist und einen überlappenden Abdeckungsbereich mit dem zellularen AP (132) hat;
**gekennzeichnet durch**:
Empfangen (510) eines Befehls, ein zellulares Modem (112) zu deaktivieren; und
Kommunizieren (512) mit dem Server (140) über das nicht zellulare Modem (114).

11. Verfahren nach Anspruch 10, wobei der zellulare AP (132) ein Femtozellen-AP ist; oder wobei der Befehl zum Deaktivieren des zellularen Modems (112) von einem der ein oder mehreren nicht-zellularen APs empfangen wird; oder das weiter Empfangen eines Befehls aufweist, ein GPS-Modem und/oder ein Bluetooth-Modem zu deaktivieren nach dem Einrichten der nicht zellularen Kommunikation mit dem Server (140).

12. Verfahren nach Anspruch 11, das weiter Folgendes aufweist:
Empfangen einer Nachricht, Kommunikation mit dem Server (140) an das nicht zellulare Modem (114) von dem zellularen Modem (112) vor dem Deaktivieren des zellularen Modems (112) zu übergeben.

13. Verfahren nach Anspruch 10, wobei das Kommunizieren mit dem Server (140) über das nicht zellulare Modem (112) Kommunizieren über ein oder mehrere der ein oder mehreren nicht zellularen APs aufweist, wenn sich die UE (110) durch einen Standort bewegt; oder das weiter Empfangen eines Befehls zum Reaktivieren des zellularen Modems (112) beim erneuten Eintreten in einen Abdeckungsbereich des zellularen AP (132) aufweist.

14. Eine Vorrichtung, die Folgendes aufweist:
Mittel zum Empfangen (504) eines Befehls, über einen zellularen Zugriffspunkt bzw. AP (AP = access point) (132), eine Aktivierung eines nicht zellularen Modems (114) auszulösen;
Mittel zum Aufbauen (508) nicht zellularer Kommunikation mit einem Server (140) über einen ersten nicht zellularen AP, wobei der erste nicht zellulare AP (134) einer von einem oder mehreren nicht zellularen APs ist und einen überlappenden Abdeckungsbereich mit dem zellularen AP (132) hat;
**gekennzeichnet durch**:
Mittel zum Empfangen (510) eines Befehls, ein zellulares Modem (112) zu deaktivieren; und
Mittel zum Kommunizieren (512) mit dem Server (140) über das nicht zellulare Modem (114).

15. Ein Computerprogrammprodukt, das ein computerlesbares Medium aufweist, das wenigstens einen Befehl aufweist, um einen Computer zu veranlassen, das Verfahren nach Anspruch 1 oder Anspruch 10 durchzuführen.

## Revendications

1. Un procédé, au niveau d'un serveur (140), destiné à la gestion de communications, comprenant :
la réception (402), d'une demande d'enregistrement d'un équipement d'utilisateur, UE (110),
la fourniture (404) d'une instruction destinée au déclenchement de l'activation d'un modem non cellulaire (114) sur l'UE (110), et
la réception (406) d'une notification indiquant que l'UE (110) a établi une communication avec un point d'accès de desserte, AP (134) d'un protocole de communication non cellulaire, l'AP de desserte (134) étant un AP d'un ou de plusieurs AP non cellulaires, **caractérisé par** : la fourniture (410) d'une instruction destinée à la désactivation d'un modem cellulaire (112) sur l'UE (110).

2. Le procédé selon la Revendication 1, où la notification comprend une première notification reçue par l'intermédiaire de l'AP de desserte (134) du protocole de communication non cellulaire, indiquant que l'UE (110) a établi la communication avec l'AP de desserte (134) du protocole de communication non cellulaire et une deuxième notification, reçue par l'intermédiaire d'un protocole de communication cellulaire, indiquant que l'UE (110) a accepté l'instruction destinée au déclenchement de l'activation du modem non cellulaire (114), ou
où la demande est reçue à partir d'un point d'accès de cellule femto et l'instruction destinée au déclenchement de l'activation du modem non cellulaire (114) et l'instruction destinée à la désactivation du modem cellulaire (112) sont transmises au point d'accès de cellule femto, ou
où la fourniture de l'instruction destinée au déclenchement de l'activation du modem non cellulaire (134) sur l'UE comprend :
la transmission d'un message à un AP de desserte (132) d'un protocole de communication cellulaire qui invite l'UE (110) à transférer la communication avec le serveur (140) au modem non cellulaire (134) à partir du modem cellulaire (112), le message invitant l'UE à activer le modem non cellulaire (114).

3. Le procédé selon la Revendication 2, comprenant en outre :
la réception d'une indication que l'UE (110) se situe à l'intérieur d'une zone de couverture d'un AP cellulaire (132) du protocole de communication cellulaire possédant une couverture en chevauchement avec un AP non cellulaire (134) du protocole de communication non cellulaire,
la détermination, en fonction de l'indication et d'une ou de plusieurs positions détectées antérieurement de l'UE (110) que l'UE (110) quitte un emplacement, et le transfert de la communication au modem cellulaire sur l'UE (110), et
la transmission d'un message à un point d'accès de desserte (134) du protocole de communication non cellulaire qui invite l'UE (110) à transférer la communication avec le serveur (140) au modem cellulaire (112) à partir du modem non cellulaire (114), le message invitant l'UE (110) à réactiver le modem cellulaire (112), où le message contient un déclencheur destiné à réactiver le modem cellulaire (112), à terminer la communication par l'intermédiaire du protocole de communication non cellulaire et à désactiver le modem non cellulaire (114).

4. Le procédé selon la Revendication 1, où la demande d'enregistrement de l'UE (110) est reçue à partir d'un dispositif en communication cellulaire avec l'UE (110).

5. Le procédé selon la Revendication 1, comprenant en outre :
la transmission d'un message fournissant une instruction destinée à inviter une application mobile à s'ouvrir sur l'UE (110) après réception d'une demande d'enregistrement de l'UE (110), où la réception de la demande indique que l'UE (110) est entré dans un emplacement associé à l'application mobile.

6. Le procédé selon la Revendication 5, où l'application mobile fournit un ou plusieurs services associés à au moins un élément parmi l'emplacement ou un serveur d'applications associé à l'emplacement.

7. Le procédé selon la Revendication 1, où la réception de la demande d'enregistrement de l'UE (110) comprend la réception d'un identifiant mobile obtenu par l'intermédiaire d'une procédure d'accès entre l'UE (110) et un point d'accès de cellule femto.

8. Le procédé selon la Revendication 7, comprenant en outre :
la réception d'informations de point d'accès de desserte indiquant que l'UE (110) communique avec un nouvel AP des un ou plusieurs AP non cellulaires,
la détermination d'un emplacement de l'UE (110) en fonction des informations de point d'accès de desserte,
la corrélation de l'emplacement de l'UE (110) avec un ou plusieurs biens ou services spécifiques à un emplacement, et
la transmission d'une information relative à un bien ou service des un ou plusieurs biens ou services spécifiques à un emplacement en fonction de la corrélation, ou comprenant en outre :
la réception d'informations de point d'accès de desserte indiquant que l'UE (110) communique avec un nouvel AP des un ou plusieurs AP non cellulaires,
le suivi d'un emplacement de l'UE (110) en fonction des informations de point d'accès de desserte,
le suivi d'informations d'interaction d'un utilisateur de l'UE (110) dans chaque emplacement, et
la conservation en mémoire de l'emplacement et des informations d'interaction pour une analyse subséquente.

9. Un appareil, comprenant :
un moyen de réception (402) d'une demande d'enregistrement d'un équipement d'utilisateur, UE (110),
un moyen de fourniture (404) d'une instruction destinée au déclenchement de l'activation d'un modem non cellulaire (114) sur l'UE (110), et
un moyen de réception (406) d'une notification indiquant que l'UE a établi une communication avec un point d'accès de desserte, AP (134) d'un protocole de communication non cellulaire, **caractérisé par** :
un moyen de fourniture (410) d'une instruction destinée à la désactivation d'un modem cellulaire (112) sur l'UE (110).

10. Un procédé, au niveau d'un équipement d'utilisateur, UE (110), destiné à la gestion de communications comprenant :
la réception (504) d'une instruction, par l'intermédiaire d'un point d'accès cellulaire, AP (132), destinée au déclenchement de l'activation d'un modem non cellulaire (114),
l'établissement (508) d'une communication non cellulaire avec un serveur (140) par l'intermédiaire d'un premier AP non cellulaire (134), le premier AP non cellulaire (134) étant un AP d'un ou de plusieurs AP non cellulaires et possédant une zone de couverture en chevauchement avec l'AP cellulaire (132), **caractérisé par** :
la réception (510) d'une instruction destinée à la désactivation d'un modem cellulaire (112), et
la communication (512) avec le serveur (140) par l'intermédiaire du modem non cellulaire (114).

11. Le procédé selon la Revendication 10, où l'AP cellulaire (132) est un AP de cellule femto, ou où l'instruction destinée à la désactivation du modem cellulaire (112) est reçue à partir d'un AP des un ou plusieurs AP non cellulaires, ou comprenant en outre la réception d'une instruction destinée à la désactivation d'un ou de plusieurs éléments parmi un modem GPS ou un modem Bluetooth après l'établissement de la communication non cellulaire avec le serveur (140).

12. Le procédé selon la Revendication 11, comprenant en outre :
la réception d'un message destiné à transférer une communication avec le serveur (140) vers le modem non cellulaire (114) à partir du modem cellulaire (112) avant la désactivation du modem cellulaire (112).

13. Le procédé selon la Revendication 10, où la communication avec le serveur (140) par l'intermédiaire du modem non cellulaire (112) comprend la communication par l'intermédiaire d'un ou de plusieurs AP des un ou plusieurs AP non cellulaires à mesure que l'UE (110) se déplace au travers d'un emplacement, ou comprenant en outre la réception d'une instruction destinée à réactiver le modem cellulaire (112) après une réentrée dans une zone de couverture de l'AP cellulaire (132).

14. Un appareil, comprenant :
un moyen de réception (504) d'une instruction, par l'intermédiaire d'un point d'accès cellulaire, AP, (132), destinée au déclenchement de l'activation d'un modem non cellulaire (114),
un moyen d'établissement (508) d'une communication non cellulaire avec un serveur (140) par l'intermédiaire d'un premier AP non cellulaire, le premier AP non cellulaire (134) étant un AP d'un ou de plusieurs AP non cellulaires et possédant une zone de couverture en chevauchement avec l'AP cellulaire (132), **caractérisé par** :
un moyen de réception (510) d'une instruction destinée à la désactivation d'un modem cellulaire (112), et
un moyen de communication (512) avec le serveur (140) par l'intermédiaire du modem non cellulaire (114).

15. Un produit de programme informatique comprenant un support lisible par ordinateur contenant au moins une instruction destinée à amener un ordinateur à exécuter le procédé selon la Revendication 1 ou 10.
